(19) 

**Europäisches Patentamt**
**European Patent Office**
**Office européen des brevets**

(11) **EP 3 339 943 B1**

(12) **EUROPEAN PATENT SPECIFICATION**

(45) Date of publication and mention
of the grant of the patent:
**17.09.2025   Bulletin 2025/38**

(51) International Patent Classification (IPC):
***G02C 13/00*** *(2006.01)*

(21) Application number: **16205896.0**

(52) Cooperative Patent Classification (CPC):
**G02C 13/005**

(22) Date of filing: **21.12.2016**

(54) **METHOD AND SYSTEM FOR OBTAINING OPTOMETRIC PARAMETERS FOR FITTING EYEGLASSES**

VERFAHREN UND SYSTEM ZUM ERHALT OPTOMETRISCHER PARAMETER ZUR ANPASSUNG VON BRILLENGLÄSERN

PROCÉDÉ ET SYSTÈME D'OBTENTION DE PARAMÈTRES OPTOMÉTRIQUES PERMETTANT D'AJUSTER DES LUNETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2018   Bulletin 2018/26**

(73) Proprietor: **Fielmann Ventures GmbH**
**22083 Hamburg (DE)**

(72) Inventors:
• **WILHELMY, Rodrigo**
**22083 Hamburg (DE)**
• **MENGE, Christoph Albert Georg**
**20457 Hamburg (DE)**

(74) Representative: **Seemann & Partner**
**Patentanwälte mbB**
**Raboisen 6**
**20095 Hamburg (DE)**

(56) References cited:
**EP-A2- 1 038 495         DE-A1- 102014 012 452**
**US-A1- 2014 253 875     US-A1- 2015 055 085**
**US-A1- 2015 198 822**

• **DE MENTHON: "Exact and Approximate Solutions of the Perspective-Three-Point Problem  S", IEEE, 1 November 1992 (1992-11-01), pages 1100 - 1105, XP055380656, Retrieved from the Internet <URL:http://ieeexplore.ieee.org/document/166625/?reload=true> [retrieved on 20170612]**
• **HARTLEY R I: "IN DEFENSE OF THE EIGHT-POINT ALGORITHM", FUSION TECHNOLOGY, AMERICAN NUCLEAR SOCIETY. LAGRANGE PARK, ILLINOIS, US, vol. 19, no. 6, 1 June 1997 (1997-06-01), pages 580 - 593, XP000861922, ISSN: 0748-1896**

EP 3 339 943 B1

**Description**

This invention concerns a method and a system for obtaining optometric parameters for fitting eyeglasses for a spectacle frame for a subject.

Fitting eyeglasses for spectacles is usually the task of an optician selling new spectacles to a customer. The easiest method for doing that is fixating the customer, henceforth also called "wearer" or "subject", wearing the spectacles with the right eye and the left eye, respectively, and marking the position of the left and right pupil, respectively, on the eyeglasses inside the spectacle frame with a marker pen.

Technological solutions for this task are available as well. An example is US 2010/0177186 A1, which teaches a method for capturing at least one digital image of the subject's face with a portable image capture appliance and processing the captured image to determine a geometrico-physiognomic parameter. Before capturing the image, the operator positions the image capture appliance manually in a first configuration in which an observation line connecting the pupil of the image capture appliance with a predetermined remarkable point associated with the subject's face or with the frame is substantially horizontal. Image capture is performed in a second configuration of the image capture appliance such that the altitude of the image capture appliance is identical to its altitude in the first configuration. The calculation of the geometrico-physiognomic parameter includes identifying on the image, the image of the predetermined remarkable point.

Likewise, US 7 950 800 B2 teaches a method of capturing a substantially front-view image, and calculating a geometrico-physiognomic parameter by processing the captured image. The calculation of this parameter includes identifying in the image of a predetermined remarkable point that is directly or indirectly associated with the wearer's face or with the frame, and it takes into consideration the magnitude representative of the absolute vertical angle of observation formed between an observation line connecting the pupil of the image capture appliance to the remarkable point, and its projection onto a horizontal plane. The geometrico-physiognomic parameter is calculated taking account of the scale factor that gives the proportionality ratio between a real dimension of the geometrical element for which an image is captured and the number of pixels in the image of said element in the direction of the dimension under consideration.

According to DE 10 2014 200 637 A1, at least one adaptation parameter for an eyeglass to be inserted into a spectacle frame is determined by capturing an image lying in an image plane of at least part of the spectacle frame worn by the subject. After capturing the image, the inclination of the image plane relative to the horizontal axis parallel to the image plane is determined and the at least one adaptation parameter is determined using the captured part of the subject with the spectacle frame and the determined inclination of the image.

In EP 1 450 201 B1, a method is disclosed for fitting optical lenses in a spectacle frame by means of a video centering system in which the object size is displayed by a marking on a calibrating means, which is provided in the spectacle lens level of the spectacle frame to be defined. The method includes acquiring the marking by a camera, feeding the same to a computer and determining the actual value of the picture distance from this and on this basis finding the values of the position of the pupil distance, whereby one of the values of the focal distances given by a zoom arrangement of the camera and the distance of the object from the camera is dependent on the relationship between the object size and its depiction size in the form of the marking on a monitor, and the correction calculation of the convergences is carried out on the basis of the relationship between object size and the depiction size in the form of the marking.

These known methods have in common that optometric parameters are obtained by taking the two-dimensional image of the spectacle frame worn by the customer and doing the calculations based on the position information of certain features in the image using scale factors in order to obtain real world measurements. Any inclinations of the subjects head with respect to the image plane are taken into account using correction factors.

A further method for measuring the geometric morphometric parameters of a person wearing glasses is known from US 2015/0198822 A1. The method comprises a step in which the person observes a target placed in a position known to the image acquisition system, by rolling his or her head in an upward direction while keeping his or her eyes fixed on the target.

In EP 1 038 495 A2, a device for measuring eye points of a subject with respect to a spectacle frame is disclosed. An index is presented to the subject, a positional relationship between an eye of the subject and the index is varied, and the eye points of the subject is measured based on information about the positional relationship between the subject's eye and the index.

It is an object of the present invention to provide a more precise method and system for obtaining optometric parameters for fitting eyeglasses for a spectacle frame for a subject.

This object is achieved by a method for obtaining optometric parameters for fitting eyeglasses for a spectacle frame for a subject, comprising the steps of:

a) capturing a frontal image of the face of a subject wearing a spectacle frame with or without eyeglasses in an intended wearing position, wherein the spectacle frame is fitted with a reference frame comprising a plurality of spaced-apart optical markers at known positions on the reference frame, wherein the frontal image captures at least the spectacle frame and the full reference frame, in particular the full face, wherein in particular the subject is focusing on a camera capturing the image,

b) detecting and labeling the fixed optical markers of the spectacle frame in the captured image, wherein an automatic template matching analysis is performed using a marker template comprising an image of one of the optical markers fixed on the reference frame, wherein image parts with the highest template matching coefficients are identified as marker candidates, and wherein the labeling is performed using a likelihood analysis using the known relative positions of the optical markers on the reference frame and permutations of the positions of the marker candidates in the captured image,

c) calculating a camera pose relative to the reference frame by solving a Perspective-n-Point problem (PnP) using two-dimensional position data of the fixed optical markers in the captured image and known three-dimensional position data of the fixed optical markers in a coordinate system defined relative to the reference frame,

d) after step a) and before or after step c), locating optometric landmarks in the captured image, in particular at least one of the positions of the centers of the pupils of the subject's eyes, the center of a bridge of the spectacle frame and a rim or rims of the spectacle frame, and

e) calculating at least one optometric parameter for the eyes and/or the spectacle frame in the three-dimensional coordinate system defined relative to the reference frame using a reverse projection of the optometric landmarks located in step d) into the coordinate system defined relative to the reference frame using the camera pose information obtained in step c),

wherein in addition to the frontal image a side image of the face is captured comprising at least the full reference frame, wherein optometric parameters are determined from the side image, and steps b) and c) and are performed for the side image as well.

The method according to the present invention is different from the methods known heretofore in that the calculation of the optometric parameters takes place in the three-dimensional real world coordinate system defined by the reference frame which has a known spatial relationship with the spectacle frame. In contrast to the prior methods, this calculation does not rely simply on scale factors but on a full coordinate transformation by way of reverse projection from the two-dimensional coordinate system provided by the captured image or images to the three-dimensional coordinate system provided by the reference frame having optical markers at known positions. Advantageously, this coordinate transformation technique allows for a full representation of the geometrical features of the users face, eyes and spectacle frame and a rigorous geometrical correction for inaccuracies caused by the image capturing methods, for example the fact that the subject focuses both of his eyes on the camera, so that the pupils are captured in a state in which they do not exhibit their natural interpupillary distance.

The reverse projection employed in the context of the present invention takes the two-dimensional coordinates of optometric landmarks identified in the picture or pictures captured by the camera and reconstructs their three coordinates in the real-world coordinate system defined relative to the reference frame by way of a coordinate system transformation. In that reconstruction, the third coordinate representing the depth information, which is not present in the captured image, is reconstructed using information regarding the distance between the camera and the reference frame, the distance between the reference frame and the pupil, and, advantageously, the distance between the pupil and the retina of the subject's eye and/or between the pupil and the center of rotation of the subject's eye. The last information uses the size of the subject's eyes, which is not accessible to be measured by the camera. However, for this purpose, well-known optometric standard models are available, a.o., the Gullstrand eye model. Such models agree with each other to a very high degree. The possible error in the 3D determination of the optometric parameters needed for the fitting of eyeglasses in a spectacle frame for a subject associated with using such a model are on the order of fractions of a millimeter and smaller than the uncertainties usually associated with the other steps of the inventive procedure.

Another advantage is that the determination of the optometric parameter or parameters is accomplished using few or no approximations, and, if approximations are used, they are based on well-known optometric standard parameters in a manner that minimizes inaccuracies caused by their usage.

Preferably, the at least one optometric parameter is at least one of a right pupillary distance ($PD_R$), a left pupillary distance ($PD_L$), an interpupillary distance (PD), a sight height, in particular a rimline sight height or a boxing sight height, a corneal vertex distance (CVD), a pantoscopic angle and a minimal diameter of the lens to be chosen for the spectacle frame.

The reference frame used is preferably structured such that it can accommodate a wide variety of spectacle frames and features a plurality of spaced-apart optical markers on its front face, and preferably also on at least one of its side faces. Preferably, the optical markers are positioned such that they are not coplanar. If the optical markers are not coplanar, they span a three-dimensional space and therefore contain information which can be used to define a reference coordinate system into which the reverse projection of the optometric landmarks can be performed. The center point of this coordinate system may be centered on one of the optical markers or at any other given position with respect to the reference frame.

In addition to the frontal image, a side image of the face is advantageously captured comprising at least the full reference frame, in particular the full head, wherein optometric parameters are determined from the side image with an accuracy that is higher than possible with the front image, in particular at least one of the corneal vertex distance (CVD) between a corneal vertex point of the subject's eye and a back vertex point of the eyeglasses of the spectacle frame, and a pantoscopic angle of the spectacle frame.

The corneal vertex distance, defined as the distance between the corneal vertex point and the back vertex point of the eyeglasses is usually between 12 and 14 mm. It complements the depth information of the distance between the camera position and the position of the reference frame and the spectacle frame. It can be used for calculating the left and right pupillary distances and the interpupillary distance, since the exact distance between the camera and the pupils need to be known. The calculation of the corneal vertex distance from the side picture may be done in one iteration, or in multiple iterations of in turn estimating the pupillary distance from the frontal picture and using this for the estimation of the corneal vertex distance from the side picture, and using that information again for the estimation of the pupillary distance from the frontal picture, and so on, until the estimates stabilize sufficiently.

The second parameter which can be determined from the side images is the pantoscopic angle of the spectacle frame. The pantoscopic angle can in principle also be determined from the frontal image, but with less accuracy than from the side image. The pantoscopic angle is usually between 7° and 15°.

In the case of the side image, the optometric landmark detection may be subject to manual user operation in the user interface instead of automatic landmark detection.

According to the invention, steps b) and c) are performed for the side image as well, wherein in particular the locating of at least one of the corneal vertex point and the back vertex point is performed manually. The user interface may be advantageously used for this purpose. From the information on the positions of the corneal vertex point and the back vertex point, the corneal vertex distance can be calculated in a straightforward manner.

In an advantageous embodiment, the effect of eye convergence due to focusing both eyes on the camera is removed in order to obtain the pupillary distance (PD). The fact that the subject is asked to focus the camera has the advantage that the direction of the eyes is known in relation to the camera and the reference frame coordinate system. This makes it possible to correct for the deviation of the actual lines of sight of both eyes with respect to the "ideal" lines of sight for the purpose of determining the interpupillary distance and the left and right pupillary distances. The "ideal" lines of sight are assumed as those in which the eyes are focused on an object in the far or infinite distance, the object being faced squarely by the subject, i.e., the centers of the subject's eyes being connected by a line which is orthogonal to the "ideal" lines of sight. Within the confines of an eyewear shop it is usually not possible for a subject to achieve a focusing of both eyes at the point in infinite distance. The correction involves calculating the rotational centers of both eyes, defining a horizontal rotation axis or a rotation axis which is orthogonal to both the line of sight of each eye and the line running through the centers of both eyes, and calculating the position of the pupils after rotating the eyes around the rotation axes into a position, in which the eyes focus an infinite distance. The distance between the center of rotation and the location of the pupil of each eye is known to a very good degree from physiological studies of the human eye.

Preferably, the optometric landmarks located in step d) are located automatically and/or manually located or corrected in the captured image before carrying out step e). Known methods for carrying out automatic optometric landmark detection which are useful in the method of the present invention are, for example, the use of Haar cascade classifiers for finding the eyes of the subject in the captured image. This method is for example implemented in the open source standard library OpenCV in the class *CascadeClassifier,* which is one of the state-of-the-art algorithms for eye detection. Such classifiers have to be trained on the type of objects to be detected, and OpenCV contains such trained classifiers for eyes. Documentation on the open source standard library OpenCV and the library itself are available at *http://www.opencv.org.*

The methods described herein and hereunder are known, and there are other libraries implementing such suitable algorithms besides OpenCV. The present application shall not be construed to be restricted to the use of OpenCV in any way. However, OpenCV and its documentation provide a suitable toolbox and body of information for the processes underlying the present invention.

Furthermore, the detection of the pupils inside the eyes, and more precisely, their centers, may, for example, be carried out using a technique called blob detection. A blob is a region in the image whose points share the same property, for example, the colour or greyscale range. The blob detection inside the eye may be aided by applying mathematical morphology operations, which allow to modify the shape of detected blobs as needed. Selection criteria depend, for example, on the roundness of the blob and the closeness to the center of the image of the eye. This automatic detection may be aided or replaced by manual user correction or manual detection by the user through the user interface.

For the detection of the spectacle frame, a Canny edge filter may be applied to the image, by way of example. This filter is provided in OpenCV by the function *Canny.* This filter will detect edges in the picture, which works quite well for straight edges. In order to avoid false-positives like the eyebrows, the edge detection may be accompanied by manual user correction via the user interface, or, in some cases, be performed entirely manually via the user interface.

In a preferred embodiment, the image or images are captured using a programmable handheld device having a built-in camera, wherein in particular the computations and manipulations are performed by the device having a software application implementing the method and having a user interface for image capturing and manipulation. Such a programmable handheld device may be a tablet computer or a smartphone. A tablet computer will have a larger screen than a smartphone, thus making image manipulation by the user more convenient and precise. In contrast, the user interface may also be provided on a computer device such as a subjectal computer which is in data connection with the camera for receiving the captured images, and which has a user interface and the display for displaying the user interface which makes manual image manipulation very convenient.

In another aspect of the invention, in the calculation of the camera pose in step c) and in the reverse projection in step e), lens distortions of the lens of the camera used for capturing the image or images are corrected for. This is preferably done internally using known distortion data of the camera lens. For this purpose, either the individual camera and its camera lens are calibrated and measured prior to performing the method of the present invention, or the distortions of a plurality of camera lenses of the same type of cameras, or, respectively, of the camera of the handheld device, are measured and standard distortion parameters are calculated from these measurements which are applied for correcting the distortions for all handheld devices of the same type. The lens distortion itself is preferably taken into account in the functions or matrices providing the projections from the real world frame into the image frame and vice versa. The result of this correction is ideally a rectilinear image, which may serve as an ideal basis for the inventively employed reverse projection. The correction may also be implemented within the inventively employed reverse projection.

According to a further aspect of the invention, a centering error in the centering of the reference frame on the spectacle frame is corrected for. This accounts for any inaccuracy of the user carrying out the method in placing the reference frame on the spectacle frame and provides for a correct determination of the left and right pupillary distances, which are measured as the distances between the pupils of the left and right eyes, respectively, and the center of the bridge of the spectacle frame.

According to the invention, in step b) of detecting and labeling the fixed optical markers of the spectacle frame in the captured image, an automatic template matching analysis is performed using a marker template comprising an image of one of the optical markers fixed on the reference frame, wherein image parts with the highest template matching coefficients are identified as marker candidates, and wherein the labeling is performed using a likelihood analysis using the known relative positions of the optical markers on the reference frame and permutations of the positions of the marker candidates in the captured image, wherein in particular more marker candidates may be included in the likelihood analysis than there are visible optical markers on the reference frame in order to eliminate false positives in the marker detection.

This is one of the first steps to be carried out when attempting to establish the reference frame coordinate system or real world coordinate system which serves for determining the real world coordinates of the optometric landmarks later on. An algorithm which is useful for this purpose is the so-called template matching, which is implemented in the OpenCV library, for example using the method *CV_TM_CCOEFF_NORMED,* which is one of several such methods implemented in OpenCV. In template matching, a certain structure is searched inside the image, in this case the structure representing the optical markers, which are preferably optically identical or near-identical and preferably have a contrast-rich structured appearance. The image of such a marker is used as the template. To avoid false positives and reduce processing time, the two-dimensional image may be cropped such that only the part of the face containing the eyes will be kept.

In order to find the optical markers in the image, the template is "slided" over the captured image and the strength of the likeness of the template and the part of the image covered by the template at the present position is calculated. Positions of high similarity between the template and the image have a small value of the resulting function. The positions in the image having the smallest values are selected as candidates. In order to avoid false positives distorting the detection, it may be advantageous to select more candidates then there are actual visible markers in the image. For example, if the reference frame features five optical markers on its front face for frontal images, the six or seven most likely candidates may be advantageously used in order to find the actual five markers in the image.

A second step consists of identifying or labelling the optical markers, that is, figuring out which of these detected markers is for example the top left marker, top right marker, bottom left, bottom right and so on. In the nonlimiting example of five visible optical markers and six or seven candidates, every permutation of five candidates is taken and their relative positions compared with the relative positions of the actual markers, and the permutations ranked for best fit. The permutation having the best fit will be the one in which the candidates do not include a false positive and are assigned to their respective actual optical markers on the reference frame.

The object of the present invention is also achieved by a system for obtaining optometric parameters for fitting eyeglasses for a spectacle frame for a subject, comprising a spectacle frame, a reference frame which is designed to be fitted on the spectacle frame, a camera and a computing device, wherein the computing device has a user interface and is connected with the camera to receive images captured by the camera, wherein the system is equipped and designed to carry out the method according to the invention. Since this system carries out the inventive method, it embodies the same features, advantages and concepts as the inventive method. The camera and the computing device may be included in one device, or may be included in two or more separate devices having a data connection.

In an embodiment of the invention, the computing device is a programmable handheld device having a built-in camera. This embodiment is advantageous in the environment of eyewear shops, because of its compact size and easy usability. The handheld device may be a smartphone, a phablet or a tablet computer. The use of a tablet computer or tablet is advantageous because of its larger display, which makes image manipulation easier than this monochrome screens of smartphones or phablets. Still, these devices are smaller than laptops or personal computers, which may be used to advantage in larger stores or environments having enough room or space for such devices.

In a further aspect of the invention, the spectacle frame is or can be fitted with a reference frame comprising a plurality of spaced-apart optical markers at known positions on the reference frame.

In yet another aspect of the invention, the computing device is programmed to detect and label the fixed optical markers of the spectacle frame in the captured image or images, to calculate the camera pose relative to the reference frame by solving a Perspective-n-Point problem (PnP) using two-dimensional position data of the fixed optical markers in the captured image and known three-dimensional position data of the fixed optical markers in a coordinate system defined relative to the reference frame, to facilitate locating optometric landmarks in the captured image automatically or using user input through the user interface, and to calculate at least one optometric parameter for the eyes and/or the spectacle frame in the three-dimensional coordinate system defined relative to the reference frame using a reverse projection of the optometric landmarks into the coordinate system defined relative to the reference frame using the camera pose information. With this, the computing device is equipped to carry out the computational steps of the above-described inventive method.

The object of the invention is also achieved by a computer software stored or storable on a computing device of a system according to the invention described above, comprising programming means to carry out the method according to the invention described above, in particular comprising a plurality of routines for performing individual steps of the method.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:

Fig. 1    a schematic representation of a reference frame with fixed optical markers and the fitting of the reference frame on a spectacle frame,

Fig. 2    a schematic represention of the step of capturing a frontal image,

Fig. 3    schematic representations of a frontal image and a side image of a subject wearing a spectacle frame with a refer- ence frame attached to it,

Fig. 4    a schematic representation of the definition of the left and right interpupillary distances,

Fig. 5    a schematic representation of the definition of the sight hight as defined as a boxing sight height and a rimline sight height,

Fig. 6    a schematic representation of the corneal vertex distance,

Fig. 7    a schematic representation of the pantoscopic angle,

Fig. 8    a schematic representation of the relation of the image reference coordinate system and a world coordinate system,

Fig. 9    a schematic representation of optical markers as templates for a marker detection,

Fig. 10    a resulting similarity map for image portions and the template of Fig. 9,

Fig. 11    a schematic representation of an optical marker labeling,

Fig. 12    images from a graphical user interface indicating pupil position and sight height intersection in a frontal image of a subject wearing a spectacle frame with a reference frame,

Fig. 13     the result of an edge detection algorithm for the image of Fig. 12, left,

Fig. 14     a centering correction between the spectacle frame and the reference frame, and

Fig. 15     a schematic representation of eye convergence.

In the drawings, the same or similar types of elements or respectively corresponding parts are provided with the same reference numbers in order to prevent the item from needing to be reintroduced.

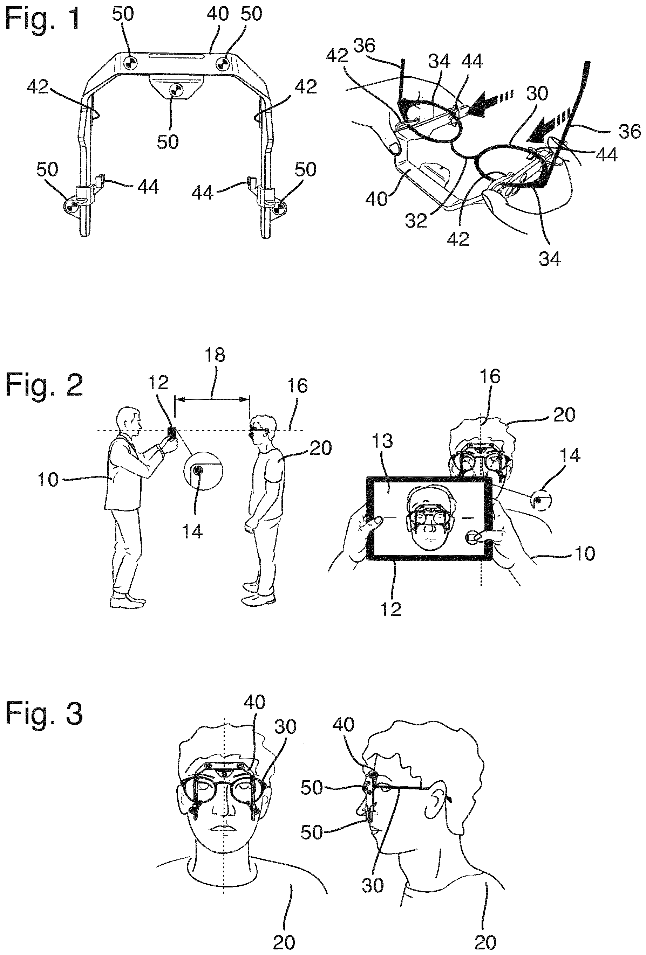

Fig. 1 shows a schematic representation of a reference frame 40 with fixed optical markers 50 in a frontal view and the fitting of the reference frame 40 on a spectacle frame 30. The reference frame 40 has further optical markers 50 facing left and right which are visible in side views, but not in a frontal view. The optical markers 50 are located at fixed positions on the reference frame 40. Ideally, they are not coplanar, thus spanning orientation points in three dimensions instead of only two. The optical appearance of the optical markers 50 is identical, which helps in automatically recognizing the optical markers 50. Alternatively, the structure of the optical markers 50 may be coded such that an identification and labeling is done at the time of their detection inside the captured image.

In the right part of Fig. 1, it is shown how a spectacle frame 30 is fitted into receptacles 42 and lower rim holders 44 of the reference frame 40. The receptacles 42 are built such that they can accommodate spectacle frames of various sizes. After the spectacle frame 30 has been inserted into the receptacles 42 and the lower rim holders 44 of the reference frame 40, the relative position of the reference frame 40 with respect to the spectacle frame 30 is fixed. The reference frame 40 has further optical markers 50 on both side faces, which are not visible in the frontal image shown in Fig. 1.

Fig. 2 shows a schematic represention of the step of capturing a frontal image of a subject 20 wearing spectacles with a reference frame 40 attached. A distance 18 of between 250 and 400 mm is chosen advantageously between the camera 14 and the reference frame 40. The insert in the left part of Fig. 2 shows that the camera 14 is a built-in camera of a handheld device. The camera 14 is preferably held at the height of the eyes 22 of the subject 20 so that the subject 20 may position him- or herself naturally. The right portion of Fig. 2 shows the perspective of the user capturing the frontal image and the image as shown in the graphical user interface on the handheld device. Also depicted is the viewing direction of the subject, who focusses both eyes on the built-in camera 14 of the handheld device.

The graphic user interface 13 on the handheld computing device 12 has visual aids to center the image on the eye portion of the subject's face before capturing the image.

Fig. 3 shows schematic representations of a frontal image and a side image of a subject wearing a spectacle frame 30 with a reference frame 40 attached to it. The side image shows the additional optical markers 50 on the side of the reference frame 40. The side image is useful for determining parameters relying on that information, such as the corneal vertex distance 66 or the pantoscopic angle 72, also called the pantoscopic tilt. If a side image is not available, both parameters can still be approximated to a good accuracy from the frontal image or from well-known empirical data.

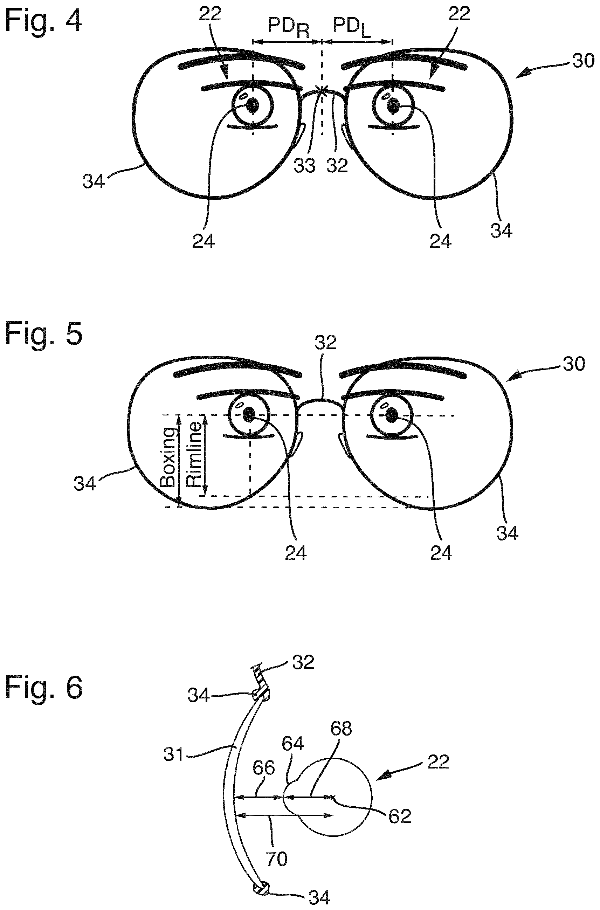

A schematic representation of the definition of the right and left interpupillary distances is shown in Fig. 4. The right and left pupillary distances $PD_R$ and $PD_L$ are calculated as the distances between the center 33 of the bridge 32 of the spectacle frame 30 and the centers of the pupils 24 of a subject's eyes 22, respectively. The interpupillary distance PD is the sum of the right and left pupillary distances $PD_R$, $PD_L$. The pupillary distances $PD_R$, $PD_L$ and the interpupillary distance PD are optometric parameters to be obtained in the methods and with the system according to the invention.

Fig. 5 is a schematic representation of the definition of the sight height as defined as a boxing sight height and a rimline sight height. The boxing sight height and the rimline sight height are different conventions of the optometric parameter of sight height. The boxing sight height is the vertical distance between the center of the pupil 24 of the subject 20 and be lowermost point of the inner rim edge of the spectacle frame 30. The rimline sight height is the vertical distance between the center of the pupil 24 of the subject 20 and the intersection of the line extending vertically down from the center of the pupil 24 and the inner edge of the rim 34 of the spectacle frame 30. The sight height will be determined for both the left eye and the right eye.

Fig. 6 shows a schematic representation of the corneal vertex distance (CVD) 66 by means of a sectional view through the human eye 22 with its cornea 64 pointing to the left of the image and an eyeglass 31 held in a spectacle frame 30. The vertex distance or corneal vertex distance 66 is defined as the distance between the cornea 64 and the back plane of the eyeglass 31 when the subject's eye 22 is pointed straight ahead. Also shown are the center of rotation 62 of the eye 22 and the center of rotation distance 70 between the center of rotation 62 of the eye 22 and the back side of the eyeglass 31. The difference between these two distances is the so-called sighting center distance 68, which is the distance between the center of rotation 62 of the eye 22 and the frontmost point of the cornea 64. The corneal vertex distance 66 is usually between 12 and 14 mm and can be measured in a side image by identifying the cornea 64 and the eyeglass 31 and/or the spectacle frame 30. Once the cornea 64 and the eyeglass 31 are identified in the side image, the corneal vertex distance 66 can be calculated by the software running on the computing device, e.g., through reverse projection.

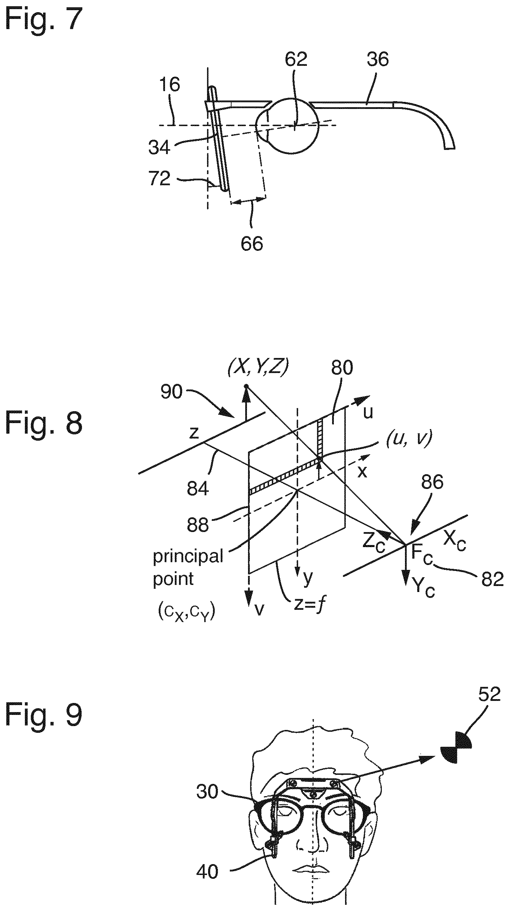

A schematic representation of the pantoscopic angle 72 or pantoscopic angle is given in Fig. 7, along with a representation of the vertex distance or corneal vertex distance 66. The pantoscopic angle 72 is the tilt or angle between the normal vector on the spectacle frame 30 and the horizontal axis, i.e., the horizontal line of sight 16, and takes into account the effect that the lens bottom is rotated towards the cheeks. The pantoscopic angle 72 usually is between 7° and 15°.

Coming now to the central concepts underlying the present invention, that is, the concepts that all calculations of optometric parameters based on the identification and position detection of optometric landmarks are performed in three-dimensional world coordinates using a coordinate system centered around and with respect to the reference frame 40, Fig. 8 shows a schematic representation of the relationships of the different coordinate systems between which transformations have to take place.

These coordinate systems are a camera-centered three dimensional coordinate system 86, a two-dimensional image plane coordinate system containing the (pixelated) image plane 80 with coordinate variables *(u, v),* a three-dimensional image coordinate system 88 centered on the principal point of the image plane with coordinate variables *(x, y, z),* and a real world coordinate system 90 with coordinate variables *(X, Y, Z),* which will be translated and rotated with respect to the camera coordinate system 86 and the image coordinate system 88.

The image plane 80 itself is two-dimensional and does not contain any information on depth. For the purpose of the following discussion, the image plane 80 is assumed to describe the plane of a picture that is rectilinear, which may be the result of the use of a rectilinear lens or of a distortion correction. The image plane 80 is the basis of a two-dimensional image plane coordinate system. Its pixels are denoted with two variables *(u, v).* Furthermore, the image plane 80 is part of a three-dimensional image coordinate system with variables *(x, y, z),* where the image plane 80 defines the plane with *z=0,*

Since the two-dimensional image plane 80 is based on the position and orientation of a camera 14, also called a camera pose, the $Z_C$-axis of the camera coordinate system 86 coincides with the optical axis 84 of the camera 14. The distance of the center point of the $Z_C=0$ plane of the camera coordinate system 86, which is the focal point $F_C$, to the principal point of the image plane 80, *i.e.*, the point where the optical axis 84 crosses the image plane 80, is the same as the focal length *f* of the camera.

The real world coordinate system 90 may, for example, be centered on the coordinates *(X, Y, Z)* or any other coordinate in the camera coordinate system 86, and be rotated with respect to the camera coordinate system 90.

Using an idealized or simplified version of a camera 14, namely a pinpoint camera, the pinpoint being located at position $F_C$, a straight ray starting at point *(X, Y, Z)* will cross the image plane at position *(u, v).* The depth information is lost. However, reverse projection is possible if a plurality of points can be identified in the image having known relative positions in the real world coordinate system 90.

A projection between the two coordinate systems, namely the real world coordinate system 90 and the image plane coordinate system in terms of the image plane coordinates *(u, v)* can be performed by way of matrix operations. A representation of the matrices involved is

$$\begin{pmatrix} u \\ v \\ 1 \end{pmatrix} = \underbrace{\begin{pmatrix} f_x & 0 & c_x \\ 0 & f_y & c_y \\ 0 & 0 & 1 \end{pmatrix} \cdot \begin{pmatrix} r_{11} & r_{12} & r_{13} & t_1 \\ r_{21} & r_{22} & r_{23} & t_2 \\ r_{31} & r_{32} & r_{33} & t_3 \end{pmatrix}}_{P=KRT} \cdot \begin{pmatrix} X \\ Y \\ Z \\ 1 \end{pmatrix},$$

wherein the vector *(u, v, 1)*$^T$ on the left hand side of the equation sign denotes the image plane coordinate system vector of a pixel, with *1* being the *z*-value of the image plane in that coordinate system, indicating the distance between the image plane 80 and the focal point $F_c$ of a simplified box camera or pinpoint camera. The rightmost vector *(X, Y, Z, 1)*$^T$ denotes the real world coordinates of an object which is visible in the image at pixel position *(u, v, 1)*$^T$.

The 3x3 matrix K denotes the camera calibration matrix having 4 degrees of freedom, namely the focal lengths $f_x$, $f_y$ in terms of pixels and the image center over principal point in the camera coordinate system $c_x$, $c_y$.

The 3x4 matrix *RT* contains the so-called *extrinsic camera parameters,* which describe how the coordinate vector of a given point in a three-dimensional Cartesian coordinate system whose origin is different from the camera center *(world coordinate system)* of a given point should be transformed in order to obtain its coordinate vector in the camera coordinate system. The entries $r_{ij}$ form a rotation matrix in a three-dimensional space and the entries $t_i$ form a translation vector. The translation vector is the reason why the real world coordinate vector *(X, Y, Z, 1)*$^T$ has a fourth entry. Matrix RT contains the so-called pose of the camera 14 with respect to the extrinsic real world coordinate system 90. This extrinsic coordinate system 90 will in the context of the present invention be identified with the coordinate system defined relative to the reference frame 40 fitted on the spectacle frame 30. This matrix representation does not represent lens distortions, which have to be accounted for separately by known methods. The most common distortions are so-called barrel distortions and pincushion distortions. Such distortions are usually known for standard lenses or can be measured.

Since the matrix *RT* consists of a rotation part and translation part, it has 6 degrees of freedom. Together with the 4 degrees of freedom of the matrix *K,* there are 10 degrees of freedom involved in the resulting matrix *P = K RT.* With five optical markers 50 in the captured image, each having two coordinates $u$ and $v$, there is enough information to solve the so-called Perspective-$n$-Point (P$n$P) problem, which means solving the above referenced matrix equation using the two-dimensional coordinates of the optical markers 50 in the captured image and the three-dimensional coordinates of the same optical markers 50 in the real-world coordinate system defined relative to the reference frame 40.

Various methods are known for solving the PnP problem, some of them are implemented in the OpenCV library to be chosen via a parameter of the function *solvePnP*. The choice of an algorithm is dependent on the spatial distribution of the optical markers 50 on the reference frame 40. Since some of them may be coplanar, one algorithm suitable for solving this problem is the so-called *Efficient Perspective-n-Point algorithm* (EPnP) which is implemented in OpenCV as parameter *CV_EPNP* for the function *solvePnP*. Another suitable algorithm is the so-called leave *Levenberg-Marquardt algorithm* (LMA), implemented in OpenCV's parameter *CV_iterative* in *solvePnP*. A further suitable algorithm is the *N-point-linear method* (NPL), which is not implemented in OpenCV but is described in A. Ansar, K. Daniilidis, "Linear pose estimation from points or lines.", IEEE Trans. On Pattern Anal. Mach. Intell., 25(5):578-589, 2003. Other methods may be used to equal advantage.

In the case of the side image, a further restriction may be imposed on the solution of the P$n$P problem by the fact that the optical markers 50 may be coplanar. One algorithm particularly suited for this situation is the aforementioned *Levenberg-Marquardt algorithm.*

The foregoing depends on identifying and labeling the optical markers 50 on the reference frame 40 in the captured image. This may be done by a method called *template matching.* As shown in Fig. 9, the optical markers 50 may be of identical layout, such as a circle with four quadrants that are filled, alternatively, with white and black regions. This high-contrast structure may serve as a marker template 52 that is overlaid over the image at all possible locations in order to find the regions of the image with the highest degree of similarity with the optical marker template 52. In order to enhance the template matching, a grayscale image of the captured image may be used. Furthermore, in order to avoid false-positives and to reduce processing time, the captured image may be cropped such that only the part of the face containing the eyes 22 including the optical markers 50 will be kept. A numerical integration in the form of a cross correlation is then performed.

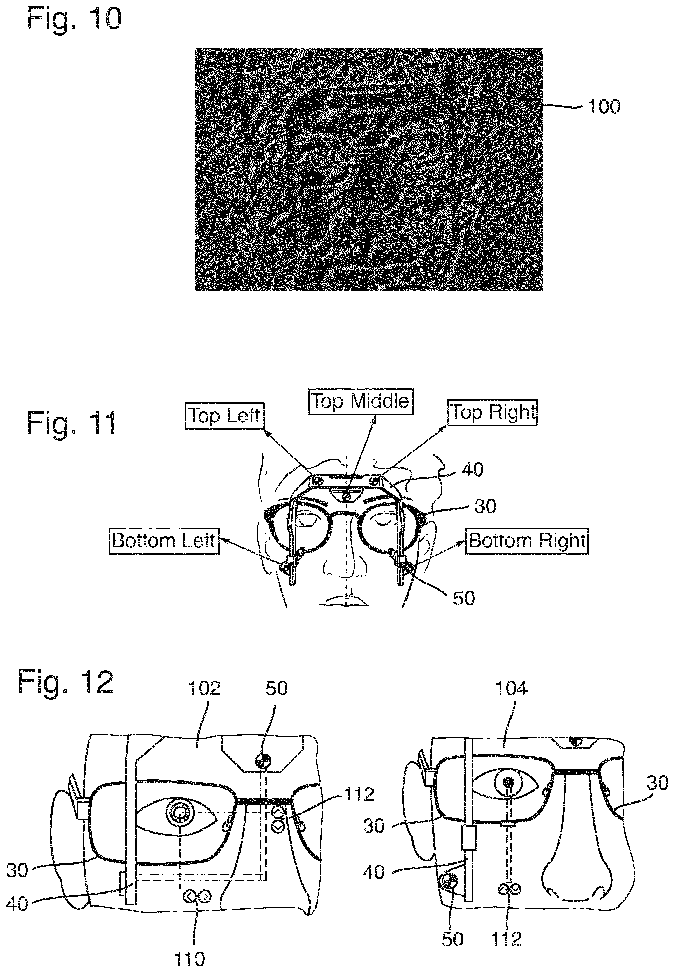

There are many algorithms available for this task. For example in OpenCV, the function *matchTemplate* may be used with the option *CV_TM_CCORR_NORMED,* which is one of several such methods implemented in that function. This method computes a result matrix 100 containing data over the degree of the similarities between the template and the source matrix. Such a result matrix 100 is displayed in Fig. 10. Values with the highest degree of matching between the marker template 52 and the underlying captured image are brighter than the rest of the image or matrix, respectively. These are the center points of the five optical markers 50.

The diameter of the optical marker 50 in the captured image will depend on the distance between the user and the subject. Therefore, it may be advantageous to loop the size of the marker template 52 over different pre-determined sizes of optical markers 50 in order to find the best match. In order to account for a tilt in the position of the head inside the captured picture, it may also be advantageous to repeat the procedure with the optical marker template 52 rotated in several steps, e.g., $\pm1°,\pm2°,\pm3°$ or similar. This step may also be subject to an optimization, where, *e.g.,* two tilts with opposite directions are tested and from the asymmetry of the amplitudes in the signals for the match, an image tilt is estimated and used for a final template matching.

Fig. 11 schematically shows marker labeling. The five optical markers 50 visible on the front face of the reference frame 40 are labeled *Bottom Left, Top Left, Top Middle, Top Right* and *Bottom Right,* respectively. Since the template matching algorithm may have identified false positives with a high signal amplitude in the background, it can be useful to use more than the number of actual optical markers 50 for an automatic marker labeling. A surplus of one or two additional candidates may suffice in most cases. The marker labeling is important in order to assign the two-dimensional positions of the optical markers 50 found in the captured image to the real world three-dimensional coordinates of the same optical markers 50 on the reference frame 40 for the purpose of reverse projection, thereby defining the relation between the 2D marker candidates and the optical markers 50 for the PnP problem. The method of marker labeling may consist of calculating for each permutation of five, or the actual number of visible optical markers 50, out of the total number of candidates, which may be six or more in the case of five visible optical markers 50, the likelihood that the configuration of the five candidates of the configuration corresponds to the five actual optical markers 50 on the reference frame 40. The permutation having the highest likelihood is taken and the corresponding marker labels are assigned to the candidates. This procedure helps eliminate false-positives, since they will not comply with the actual special distribution of the optical markers 50.

Once the data necessary for solving the PnP problem are ascertained, reverse projection from the image coordinate system 88 to the real world coordinate system 90 related to the reference frame 40 becomes possible.

Before or after the template matching and marker identification and labeling, optometric landmarks may be located by automatic or semi-automatic methods, or manually using the user interface 13.

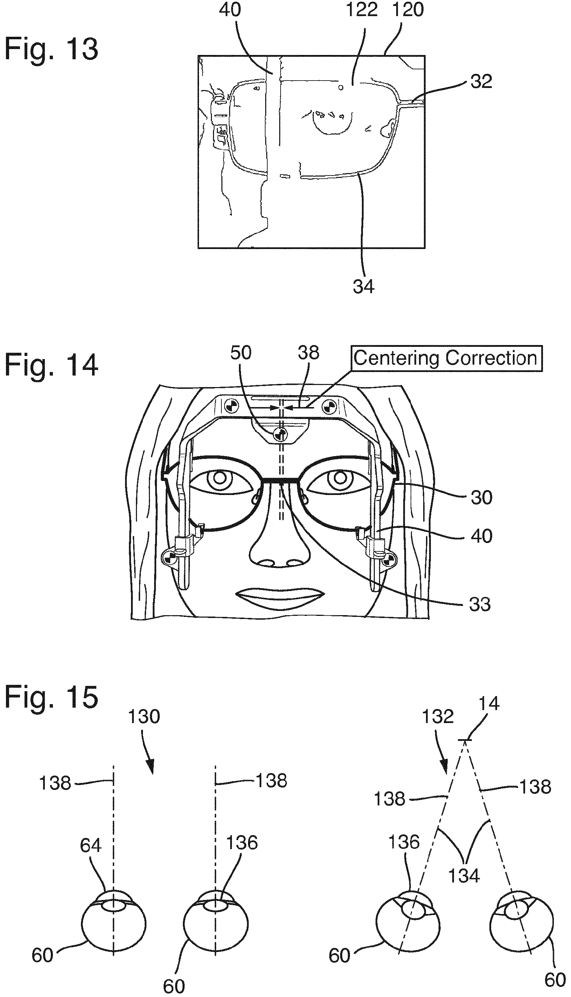

Figs. 12 and 13 show some examples of optometric landmarks, such as the pupil position, the sight height intersection, which in the case of Fig. 12 is the sight height according to the rimline sight height definition. The left and right parts of Fig. 12 show images from a graphical user interface 13 indicating pupil position and sight height intersection in a frontal image of a subject 20 wearing a spectacle frame 30 with a reference frame 40 attached thereto.

Automatic detection of the pupil position, or, more precisely, the center position of the pupil 24, relies on an identification of the eye 22 of the subject 20. This problem is well-known in image recognition and may be solved, e.g., by the application of *Haar Cascade Classifiers,* which are implemented in OpenCV, already pre-trained for eye detection. Inside the region identified as eyes 22, the pupil's centers may be identified, e.g., by means of blob detection, wherein blobs denote regions of pixels having the same properties. Selection criteria for the pupils 24 may be the roundness of the blob or the closeness to the center of image. Mathematical morphology operations may be applied to modify the shape of the detected blobs as needed to extract from the picture the actual pupil shape.

The pupil detection may require manual correction by the user. This is shown in the left part of Fig. 12 through a horizontal slider interface 110 and a vertical slider interface 112 inside a user interface display of the pupil position 102, by which the user 10 may adapt the location of the ring encircling the pupil 24 in order to better center the ring on the pupil 24.

The right part of Fig. 12 depicts the sight height determination in the convention of the rimline sight height. A straight vertical line is drawn starting from the identified center of the pupil 24. The point of intersection with the inner rim edge of the spectacle frame 30 is identified and the distance between this intersection and the pupil's center is calculated. Alternatively, the boxing sight height may be determined by using the vertical line depicted in the right image of Fig. 12 and sliding a horizontal line running at a right angle to the vertical line along the vertical line, until the horizontal line runs through the lowest point of the inner rim edge of the spectacle frame 30. This intersection may also be corrected by a user using a vertical slider interface 112 within the user interface 13 inside a user interface display of sight height intersection 104.

Fig. 13 shows the result matrix 120 of an edge detection algorithm for the image of Fig. 12, left part, which is used to detect the edges of the spectacle frame 30 in the captured image. The edge detection algorithm succeeds very well for large parts of the rim 34 and the center 33 of the bridge 32, but may fail in areas with little contrast, such as the region 122 in which the spectacle frame 30 comes close to or overlays the eyebrows. Another object producing results in the edge detection is the reference frame 40, overlaying the rim 34 in parts.

The edge detection may be done by applying an appropriate filter, such as a *Canny Edge Filter,* which is, e.g., implemented in OpenCV. This edge detection may be complemented by methods to parametrize the spectacle frame 30, such as using a *radial polygon generator,* which may be subjected to correction by a user. A radial polygon generator casts rays starting at the center of each pupil 24, which go to the rim 34 of the frame until the first edge detected by the Canny filter is hit. These points are then considered as vertices of a polygon with one polygon per pupil, which may be smoothed afterwards in order to obtain a polygon with a finite number of vertices. The number of vertices that has worked well in most cases was between 30 and 60, preferably up to 40 vertices. Vertices going astray in regions like the region 122 or in the region where the ray hits the edge defined by the reference frame 40 first may be discarded or directed to find the next possible edges in the direction of the ray.

Furthermore, the center 33 of the bridge 32 of the spectacle frame 30 may be identified using the result of the edge detection.

Having identified the location and position of the spectacle frame 30 in the captured image as well as the height and the center of the spectacle bridge 32, it is then possible to correct for any offset in the positioning of the reference frame 40 with respect to the spectacle frame 30. Fig. 14 shows the centering correction 38 in a captured image, in which the reference frame 40 has an offset to the left, as seen in the frontal image, with respect to the spectacles. This offset is taken into account when reverse projecting the optometric landmarks into the real world coordinates, since the important reference for the optometric landmarks is not the reference frame 40, but the spectacle frame 30.

Fig. 15 shows a schematic representation of eye convergence 134, which must be accounted for when determining the interpupillary distance PD and the left and right pupillary distances $PD_L$, $PD_R$, respectively. The left part of Fig. 15 shows an ideal orientation of the subject's eyes 22 for the determination of the interpupillary distance PD, in which both eyes 22 are focused on an object 130 which is far away. In this case, both eyes 22 are oriented with the central line of sight 138 parallel to the other one, respectively.

In contrast, when the frontal image is captured in the method according to the present invention, the subject 20 may be asked to focus the camera 14. In that case, the central lines of sight 138 of the left and right eyes converge at the location of the camera 14, which in this case is a near object 132. Consequently, the distance between the corneas 64 of the left and right eyes 22 is smaller than in the ideal case. This deviation has to be corrected for when doing the fitting of the eyeglasses 31. The difference between the focussing on a distant object 130 and a near object 132 can also be observed in the accomodation 136, which is different in the two cases.

Correcting the effect of eye convergence 134 is a matter of locating the center of rotation 62 of the eye 22 in the three-dimensional coordinates starting from the center points of the pupils 24 in the captured image and reverse projecting these optometric landmarks into the real world coordinate system 90 of the reference frame 40. The axes of rotation will run through the centers of rotation 62 of the eyes 22. In order to calculate the positions of the centers of rotation 62 of the eyes 22, the distance of the camera 14 to the eyeglasses 31, which is known as a result of the solution of the PnP problem and the reverse projection, the corneal vertex distances 66 between the eyeglasses 31 and the cornea 64 of each eye 22 and the distance between the center of rotation 62 of the eye 22 and the cornea 64 of each eye 22 are summed up. The distance between the centers of rotation 62 of the left and right eyes 22 together with the distance between the camera 14 and the baseline between the centers of rotation 62 of the eyes 22 determine the angle of convergence, which may be corrected for by computationally rotating both eyes 22 outward in order to achieve the situation depicted in the left part of Fig. 15 with parallel central lines of sight 138.

Once the eye convergence 134 has been eliminated, optometric parameters such as the interpupillary distance PD and the left and right pupillary distances $PD_L$, $PD_R$, which are defined with respect to the center 33 of the bridge 32 of the spectacle frame 30, may be determined as distances in the three-dimensional real world coordinate system 90 and used for fitting the eyeglasses 31 for the spectacle frame 30.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

List of References

| | |
|---|---|
| 10 | user |
| 12 | computing device |
| 13 | user interface |
| 14 | camera |
| 16 | horizontal line of sight |
| 18 | distance between camera and reference frame |
| 20 | subject |
| 22 | eye |
| 24 | pupil |
| 30 | spectacle frame |
| 31 | eyeglass |
| 32 | bridge |
| 33 | center of bridge |
| 34 | rim |
| 36 | temple |
| 38 | centering correction |
| 40 | reference frame |
| 42 | receptacle |
| 44 | lower rim holder |
| 50 | optical marker |
| 52 | marker template |
| 62 | center of rotation of the eye |
| 64 | cornea |
| 66 | corneal vertex distance |
| 68 | sighting center distance |
| 70 | center of rotation distance |
| 72 | pantoscopic angle |
| 80 | image plane |
| 82 | center of focus $F_c$ |
| 84 | optical axis |
| 86 | camera coordinate system |
| 88 | image coordinate system |
| 90 | real world coordinate system |
| 100 | template matching result matrix |
| 102 | user interface display of pupil position |
| 104 | user interface display of sight height intersection |
| 110 | horizontal slider interface |
| 112 | vertical slider interface |
| 120 | result matrix of edge detection |

122     low contrast region
130     far object
132     near object
134     convergence
136     accommodation
138     central line of sight

**Claims**

1.  Method for obtaining optometric parameters for fitting eyeglasses (31) for a spectacle frame (30) for a subject (20), comprising the steps of:

    a) capturing a frontal image of the face of a subject (20) wearing a spectacle frame (30) with or without eyeglasses (31) in an intended wearing position, wherein the spectacle frame (30) is fitted with a reference frame (40) comprising a plurality of spaced-apart optical markers (50) at known positions on the reference frame (40), wherein the frontal image captures at least the spectacle frame (30) and the full reference frame (40),
    b) detecting and labeling the fixed optical markers (50) of the spectacle frame (40) in the captured image, wherein an automatic template matching analysis is performed using a marker template (52) comprising an image of one of the optical markers (50) fixed on the reference frame (40), wherein image parts with the highest template matching coefficients are identified as marker candidates, and wherein the labeling is performed using a likelihood analysis using the known relative positions of the optical markers (50) on the reference frame (40) and permutations of the positions of the marker candidates in the captured image,
    c) calculating a camera pose relative to the reference frame (40) by solving a Perspective-n-Point problem (PnP) using two-dimensional position data of the fixed optical markers (50) in the captured image and known three-dimensional position data of the fixed optical markers (50) in a coordinate system defined relative to the reference frame,
    d) after step a) and before or after step c), locating optometric landmarks in the captured image, and
    e) calculating at least one optometric parameter for the eyes (22) and/or the spectacle frame (30) in the three-dimensional coordinate system defined relative to the reference frame (40) using a reverse projection of the optometric landmarks located in step d) into the coordinate system defined relative to the reference frame (40) using the camera pose information obtained in step c),

    wherein in addition to the frontal image a side image of the face is captured comprising at least the full reference frame (40), wherein optometric parameters are determined from the side image, and steps b) and c) are performed for the side image as well.

2.  The method according to claim 1, **characterized in that** the at least one optometric parameter is at least one of a right pupillary distance (PD$_R$), a left pupillary distance (PD$_L$), an interpupillary distance (PD), a sight height, a corneal vertex distance (CVD), a pantoscopic angle (72) and a minimal diameter of the lens to be chosen for the spectacle frame (30).

3.  The method according to claim 1 or 2, **characterized in that** the effect of eye convergence (134) due to focusing both eyes (22) on the camera (14) is removed in order to obtain the pupillary distance (PD).

4.  The method according to one of claims 1 to 3, **characterized in that** the optometric landmarks located in step d) are located automatically and/or manually located or corrected in the captured image before carrying out step e).

5.  The method according to one of claims 1 to 4, **characterized in that** the image or images are captured using a programmable handheld device (12) having a built-in camera (14).

6.  The method according to one of claims 1 to 5, **characterized in that** in the calculation of the camera pose in step c) and in the reverse projection in step e), lens distortions of the lens of the camera (14) used for capturing the image or images are corrected for.

7.  The method according to one of claims 1 to 6, **characterized in that** a centering error in the centering of the reference frame (40) on the spectacle frame (30) is corrected for.

8.  The method according to one of claims 1 to 7, **characterized in that** in step b) of detecting and labeling the fixed optical markers (50) of the spectacle frame (40) in the captured image, more marker candidates are included in the likelihood analysis than there are visible optical markers (50) on the reference frame (40) in order to eliminate false positives in the marker detection.

9. System for obtaining optometric parameters for fitting eyeglasses (31) for a spectacle frame (30) for a subject (30), comprising a spectacle frame (30), a reference frame (40) which is designed to be fitted on the spectacle frame (30), a camera (14) and a computing device (12), wherein the computing device (12) has a user interface (13) and is connected with the camera (14) to receive images captured by the camera (14), wherein the system is equipped and designed to carry out the method according to one of claims 1 to 8.

10. System according to claim 9, **characterized in that** the computing device (12) is a programmable handheld device having a built-in camera (14).

11. System according to claim 9 or 10, **characterized in that** the spectacle frame (30) is be fitted with a reference frame (40) comprising a plurality of spaced-apart optical markers (50) at known positions on the reference frame (40).

12. System according to one of claims 9 to 11, **characterized in that** the computing device (12) is programmed to detect and label the fixed optical markers (50) of the spectacle frame (40) in the captured image or images, to calculate the camera pose relative to the reference frame (40) by solving a Perspective-n-Point problem (PnP) using two-dimensional position data of the fixed optical markers (50) in the captured image and known three-dimensional position data of the fixed optical markers (50) in a coordinate system defined relative to the reference frame (40), to facilitate locating optometric landmarks in the captured image automatically or using user input through the user interface (13), and to calculate at least one optometric parameter for the eyes (22) and/or the spectacle frame (30) in the three-dimensional coordinate system defined relative to the reference frame (40) using a reverse projection of the optometric landmarks into the coordinate system defined relative to the reference frame (40) using the camera pose information.

13. Computer software stored or storable on a computing device (12) of a system according to one of claims 9 to 12, comprising programming means to carry out the method according to one of claims 1 to 8, comprising a plurality of routines for performing individual steps of the method.

**Patentansprüche**

1. Verfahren zum Ermitteln optometrischer Parameter zur Anpassung von Brillengläsern (31) für eine Brillenfassung (30) für eine Person (20), aufweisend die Schritte:

   a) Erfassen eines Frontalbildes des Gesichts einer eine Brillenfassung (30) mit oder ohne Brillengläser (31) in einer beabsichtigten Trageposition tragenden Person (20), wobei die Brillenfassung (30) mit einem Referenzrahmen (40) ausgestattet ist, der eine Mehrzahl von voneinander beabstandeten optischen Marker (50) an bekannten Positionen an dem Referenzrahmen (40) aufweist, wobei das Frontalbild mindestens die Brillenfassung (30) und den vollständigen Referenzrahmen (40) erfasst,
   b) Erkennen und Kennzeichnen der feststehenden optischen Marker (50) der Brillenfassung (40) in dem erfassten Bild, wobei eine automatische Vorlagenabgleichsanalyse unter Verwendung einer ein Bild eines der an dem Referenzrahmen (40) fixierten optischen Marker (50) aufweisenden Markervorlage (52) durchgeführt wird, wobei Bildteile mit den höchsten Vorlagenabgleichkoeffizienten als Markerkandidaten identifiziert werden, und wobei das Kennzeichnen unter Verwendung einer Wahrscheinlichkeitsanalyse unter Verwendung der bekannten relativen Positionen der optischen Marker (50) an dem Referenzrahmen (40) und Permutationen der Positionen der Markerkandidaten in dem erfassten Bild durchgeführt wird,
   c) Berechnen einer Kamerastellung relativ zu dem Referenzrahmen (40) durch Lösen eines Perspective-n-Point-Problems (PnP) unter Verwendung zweidimensionaler Positionsdaten der feststehenden optischen Marker (50) in dem erfassten Bild und bekannter dreidimensionaler Positionsdaten der feststehenden optischen Marker (50) in einem relativ zu dem Referenzrahmen definierten Koordinatensystem,
   d) nach Schritt a) und vor oder nach Schritt c) Lokalisieren optometrischer Orientierungspunkte in dem aufgenommenen Bild und
   e) Berechnen mindestens eines optometrischen Parameters für die Augen (22) und/oder die Brillenfassung (30) in dem relativ zu dem Referenzrahmen (40) definierten dreidimensionalen Koordinatensystem unter Verwendung einer Rückprojektion der in Schritt d) lokalisierten optometrischen Orientierungspunkte in das relativ zu dem Referenzrahmen (40) definierte Koordinatensystem unter Verwendung der in Schritt c) ermittelten Kamerastellungsinformation,

wobei zusätzlich zu dem Frontalbild ein Seitenbild des Gesichts erfasst wird, das mindestens den vollständigen Referenzrahmen (40) aufweist, wobei optometrische Parameter aus dem Seitenbild bestimmt werden und die Schritte b) und c) ebenfalls für das Seitenbild durchgeführt werden.

2. Verfahren nach Anspruch 1, **dadurch gekennzeichnet, dass** der mindestens eine optometrische Parameter mindestens ein rechter Augenabstand (PDr), ein linker Augenabstand (PDI), ein Augenabstand (PD), eine Blickhöhe, ein Hornhautscheitelabstand (CVD), ein Vorneigungswinkel (72) und/oder ein für die Brillenfassung (30) zu wählender minimaler Durchmesser des Brillenglases ist.

3. Verfahren nach Anspruch 1 oder 2, **dadurch gekennzeichnet, dass** der Effekt der Augenkonvergenz (134) aufgrund der Fokussierung beider Augen (22) auf die Kamera (14) entfernt wird, um den Augenabstand (PD) zu ermitteln.

4. Verfahren nach einem der Ansprüche 1 bis 3, **dadurch gekennzeichnet, dass** die in Schritt d) lokalisierten optometrischen Orientierungspunkte vor dem Ausführen von Schritt e) automatisch und/oder manuell in dem erfassten Bild lokalisiert oder korrigiert werden.

5. Verfahren nach einem der Ansprüche 1 bis 4, **dadurch gekennzeichnet, dass** das oder die Bilder unter Verwendung eines programmierbaren Handgeräts (12) mit einer eingebauten Kamera (14) erfasst werden.

6. Verfahren nach einem der Ansprüche 1 bis 5, **dadurch gekennzeichnet, dass** bei der Berechnung der Kamerastellung in Schritt c) und bei der Rückprojektion in Schritt e) Objektivverzerrungen des Objektivs der zum Erfassen des oder der Bilder verwendeten Kamera (14) korrigiert werden.

7. Verfahren nach einem der Ansprüche 1 bis 6, **dadurch gekennzeichnet, dass** ein Zentrierfehler bei der Zentrierung des Referenzrahmens (40) an der Brillenfassung (30) korrigiert wird.

8. Verfahren nach einem der Ansprüche 1 bis 7, **dadurch gekennzeichnet, dass** in Schritt b) zum Erkennen und Kennzeichnen der feststehenden optischen Marker (50) der Brillenfassung (40) in dem erfassten Bild mehr Markerkandidaten in die Wahrscheinlichkeitsanalyse einbezogen werden, als es sichtbare optische Marker (50) an dem Referenzrahmen (40) gibt, um falsche positive Ergebnisse bei der Markererkennung zu eliminieren.

9. System zum Ermitteln optometrischer Parameter zur Anpassung von Brillengläsern (31) für eine Brillenfassung (30) für eine Person (30), aufweisend eine Brillenfassung (30), einen Referenzrahmen (40), der ausgebildet ist, auf die Brillenfassung (30) aufgesetzt zu werden, eine Kamera (14) und eine Recheneinrichtung (12), wobei die Recheneinrichtung (12) eine Benutzerschnittstelle (13) hat und mit der Kamera (14) verbunden ist, um von der Kamera (14) erfasste Bilder zu empfangen, wobei das System ausgerüstet und ausgebildet ist, das Verfahren nach einem der Ansprüche 1 bis 8 auszuführen.

10. System nach Anspruch 9, **dadurch gekennzeichnet, dass** die Recheneinrichtung ein programmierbares Handgerät (12) mit einer eingebauten Kamera (14) ist.

11. System nach Anspruch 9 oder 10, **dadurch gekennzeichnet, dass** die Brillenfassung (30) mit einem Referenzrahmen (40) ausgestattet ist, der eine Mehrzahl von voneinander beabstandeten optischen Markern (50) an bekannten Positionen an dem Referenzrahmen (40) aufweist.

12. System nach einem der Ansprüche 9 bis 11, **dadurch gekennzeichnet, dass** die Recheneinrichtung (12) programmiert ist, die feststehenden optischen Marker (50) der Brillenfassung (40) in dem oder den erfassten Bild oder Bildern zu erfassen und zu kennzeichnen, die Kamerastellung relativ zu dem Referenzrahmen (40) durch Lösen eines Perspektive-n-Point-Problems (PnP) unter Verwendung zweidimensionaler Positionsdaten der feststehenden optischen Markern (50) in dem erfassten Bild und bekannter dreidimensionaler Positionsdaten der feststehenden optischen Marker (50) in einem relativ zu dem Referenzrahmen (40) definierten Koordinatensystem zu berechnen, um das Lokalisieren optometrischer Orientierungspunkte in dem erfassten Bild automatisch oder unter Verwendung von Benutzereingabe über die Benutzerschnittstelle (13) zu erleichtern, und mindestens einen optometrischen Parameter für die Augen (22) und/oder die Brillenfassung (30) in dem relativ zu dem Referenzrahmen (40) definierten dreidimensionalen Koordinatensystem unter Verwendung einer Rückprojektion der optometrischen Orientierungspunkte in das relativ zu dem Referenzrahmen (40) definierte Koordinatensystem unter Verwendung der Kamerastellungsinformation zu berechnen.

13. Computersoftware, die auf einer Recheneinrichtung (12) eines Systems nach einem der Ansprüche 9 bis 12 gespeichert oder speicherbar ist, aufweisend Programmiermittel zum Ausführen des Verfahrens nach einem der Ansprüche 1 bis 8, aufweisend eine Mehrzahl von Routinen zum Durchführen einzelner Schritte des Verfahrens.

**Revendications**

1.  Procédé pour obtenir des paramètres optométriques permettant d'ajuster des verres (31) destinés à une monture de lunettes (30) pour un sujet (20), comprenant les étapes suivantes :

    a) capturer une image frontale du visage d'un sujet (20) portant une monture de lunettes (30) avec ou sans verres (31) dans une position de port prévue, la monture de lunettes (30) étant équipée d'une structure de référence (40) comprenant une pluralité de marqueurs optiques espacés (50) situés en des positions connues sur la structure de référence (40), l'image frontale capturant au moins la monture de lunettes (30) et la structure de référence complète (40),
    b) détecter et étiqueter les marqueurs optiques fixes (50) de la monture de lunettes (40) dans l'image capturée, une analyse automatique de correspondance de modèles étant effectuée en utilisant un modèle de marqueurs (52) comprenant une image de l'un des marqueurs optiques (50) fixés sur la structure de référence (40), des parties d'image qui présentent les coefficients de correspondance de modèle les plus élevés étant identifiées comme étant des marqueurs candidats, et l'étiquetage étant effectué en utilisant une analyse de probabilité utilisant les positions relatives connues des marqueurs optiques (50) sur la structure de référence (40) et des permutations des positions des marqueurs candidats dans l'image capturée,
    c) calculer une pose de caméra par rapport à la structure de référence (40) en résolvant un problème de perspective à n points (PnP) en utilisant des données de position bidimensionnelles des marqueurs optiques fixes (50) dans l'image capturée et de données de position tridimensionnelles connues des marqueurs optiques fixes (50) dans un système de coordonnées défini par rapport à la structure de référence,
    d) après l'étape a) et avant ou après l'étape c), localiser des repères optométriques dans l'image capturée, et
    e) calculer au moins un paramètre optométrique pour les yeux (22) et/ou la monture de lunettes (30) dans le système de coordonnées tridimensionnel défini par rapport à la structure de référence (40) en utilisant une projection inversée des repères optométriques localisés durant l'étape d) dans le système de coordonnées défini par rapport à la structure de référence (40) en utilisant les informations de pose de la caméra obtenues à l'étape c) ;

    en plus de l'image frontale, une image latérale du visage est capturée comprenant au moins la structure de référence complète (40), des paramètres optométriques étant déterminés à partir de l'image latérale, et les étapes b) et c) étant également mises en œuvre pour l'image latérale.

2.  Le procédé selon la revendication 1, **caractérisé en ce que** ledit au moins un paramètre optométrique est au moins un parmi une distance pupillaire droite ($PD_R$), une distance pupillaire gauche ($PD_L$), une distance interpupillaire (PD), une hauteur de vision, une distance vertex cornéenne (CVD), un angle pantoscopique (72) et un diamètre minimal de la lentille à choisir pour la monture de lunettes (30).

3.  Le procédé selon la revendication 1 ou la revendication 2, **caractérisé en ce que** l'effet de convergence des yeux (134) dû à la focalisation des deux yeux (22) sur la caméra (14) est supprimé afin d'obtenir la distance pupillaire (PD).

4.  Le procédé selon l'une des revendications 1 à 3, **caractérisé en ce que** les repères optométriques localisés durant l'étape d) sont localisés automatiquement et/ou manuellement ou corrigés dans l'image capturée avant de mettre en œuvre l'étape e).

5.  Le procédé selon l'une des revendications 1 à 4, **caractérisé en ce que** l'image ou les images sont capturées en utilisant un dispositif portable programmable (12) comportant une caméra intégrée (14).

6.  Le procédé selon l'une des revendications 1 à 5, **caractérisé en ce que** lors du calcul de la pose de la caméra à l'étape c) et lors de la projection inversée à l'étape e), des distorsions de la lentille de la caméra (14) utilisée pour capturer l'image ou les images sont corrigées.

**7.** Le procédé selon l'une des revendications 1 à 6, **caractérisé en ce qu'**une erreur de centrage dans le centrage du cadre de référence (40) sur la monture de lunettes (30) est corrigée.

**8.** Le procédé selon l'une des revendications 1 à 7, **caractérisé en ce que**, lors de l'étape b) de détection et d'étiquetage des marqueurs optiques fixes (50) de la monture de lunettes (40) dans l'image capturée, un nombre de marqueurs candidats supérieur au nombre de marqueurs optiques visibles (50) sur la structure de référence (40) est inclus dans l'analyse de probabilité afin d'éliminer les faux positifs dans la détection des marqueurs.

**9.** Système pour obtenir des paramètres optométriques pour l'ajustement de verres (31) pour une monture de lunettes (30) pour un sujet (30), comprenant une monture de lunettes (30), une structure de référence (40) qui est conçue pour être ajustée sur la monture de lunettes (30), une caméra (14) et un dispositif informatique (12), le dispositif informatique (12) comprenant une interface utilisateur (13) et étant connecté à la caméra (14) pour recevoir des images capturées par la caméra (14), le système étant équipé et conçu pour mettre en œuvre le procédé selon l'une des revendications 1 à 8.

**10.** Système selon la revendication 9, **caractérisé en ce que** le dispositif informatique (12) est un appareil portable programmable comprenant une caméra intégrée (14).

**11.** Système selon la revendication 9 ou la revendication 10, **caractérisé en ce que** la monture de lunettes (30) est équipée d'une structure de référence (40) comprenant une pluralité de marqueurs optiques espacés (50) en des positions connues sur la structure de référence (40).

**12.** Système selon l'une des revendications 9 à 11, **caractérisé en ce que** le dispositif informatique (12) est programmé pour détecter et étiqueter les marqueurs optiques fixes (50) de la monture de lunettes (40) dans l'image ou les images capturées, afin de calculer la pose de la caméra par rapport à la structure de référence (40) en résolvant un problème de perspective à $n$ points (P$n$P) en utilisant des données de position bidimensionnelles des marqueurs optiques fixes (50) dans l'image capturée et les données de position tridimensionnelles connues des marqueurs optiques fixes (50) dans un système de coordonnées défini par rapport à la structure de référence (40), afin de faciliter la localisation des repères optométriques dans l'image capturée, automatiquement ou en utilisant une entrée de l'utilisateur via l'interface utilisateur (13), et pour calculer au moins un paramètre optométrique pour les yeux (22) et/ou la monture de lunettes (30) dans le système de coordonnées tridimensionnel défini par rapport à la structure de référence (40) en utilisant une projection inversée des repères optométriques dans le système de coordonnées défini par rapport à la structure de référence (40) en utilisant les informations de pose de la caméra.

**13.** Logiciel informatique stocké ou stockable sur un dispositif informatique (12) d'un système selon l'une des revendications 9 à 12, comprenant des moyens de programmation pour mettre en œuvre le procédé selon l'une des revendications 1 à 8, comprenant une pluralité de routines pour mettre en œuvre les différentes étapes du procédé.

Fig. 1

Fig. 2

Fig. 3

Fig. 4

Fig. 5

Fig. 6

# Fig. 7

# Fig. 8

# Fig. 9

Fig. 10

— 100

Fig. 11

Top Left | Top Middle | Top Right

40

30

Bottom Left | Bottom Right

50

Fig. 12

102    50                                104

112

30                                       30

30

40

50                                        50   112

110

Fig. 13

40     122  120

32

34

Fig. 14

50     38     Centering Correction

30

40

33

Fig. 15

130

138          138

14

132

138          138

64     136

138          138

60     60

136

134

60          60

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100177186 A1
- US 7950800 B2
- DE 102014200637 A1
- EP 1450201 B1
- US 20150198822 A1
- EP 1038495 A2

**Non-patent literature cited in the description**

- **A. ANSAR ; K. DANIILIDIS**. Linear pose estimation from points or lines.. *IEEE Trans. On Pattern Anal. Mach. Intell.*, 2003, vol. 25 (5), 578-589